# EUROPÄISCHE PATENTSCHRIFT

(11) **EP 3 064 050 B1**
(45) Veröffentlichungstag und Bekanntmachung des Hinweises auf die Patenterteilung: **01.01.2020**
(21) Anmeldenummer: 16156904.1
(22) Anmeldetag: 23.02.2016
(51) Int. Cl.: A01B 69/00, A01B 63/00

(54) **STEUERUNGSSYSTEM FÜR EIN LANDWIRTSCHAFTLICHES ARBEITSGERÄT**
CONTROL SYSTEM FOR AN AGRICULTURAL WORKING DEVICE
SYSTÈME DE CONTRÔLE D'UN APPAREIL DE TRAVAIL AGRICOLE

(30) Priorität: 27.02.2015 DE 102015102881
(43) Veröffentlichungstag der Anmeldung: 07.09.2016
(73) Patentinhaber: CLAAS Saulgau GmbH, 88348 Bad Saulgau (DE)
(72) Erfinder: PFLANZE, Sascha, 88348 Braunenweiler (DE)

(56) Entgegenhaltungen:
- EP-A1- 1 710 114
- DE-A1- 10 206 044
- DE-A1-102004 032 642
- DE-U1- 20 221 564
- US-A- 6 070 539

## Beschreibung

Die Erfindung betrifft ein Steuerungssystem eines landwirtschaftlichen Arbeitsgeräts und ein landwirtschaftlichen Arbeitsgerät.

Im Betrieb von landwirtschaftlichen Arbeitsgeräten, wie zum Beispiel im Betrieb einer Kombination eines landwirtschaftlichen Zugfahrzeugs mit einem landwirtschaftlichen Anhängegerät, spielt der Einsatz der Automatisierungs- und Informationstechnik eine immer größere Bedeutung. Dabei tauschen die Baugruppen eines Arbeitsgeräts über einen Datenbus, der in der Landwirtschaft auch als ISO-Datenbus bezeichnet wird, untereinander Daten aus. So tauscht zum Beispiel ein landwirtschaftliches Zugfahrzeug mit einem landwirtschaftlichen Anhängegerät Daten über den ISO-Datenbus aus. Eine Mensch-Maschine-Schnittstelle eines ISO-Datenbus-Steuerungssystems eines landwirtschaftlichen Arbeitsgeräts dient der Anzeige und Eingabe von Daten für das landwirtschaftliche Arbeitsgerät.

Aus EP 1 710 114 A1 ist eine landwirtschaftliche elektronische Überwachungs-, Steuerungs- und Regeleinrichtung mit Betätigungs- und Eingabeeinrichtungen bekannt, die in einer ein Lenkrad aufweisenden landwirtschaftlichen Maschine angeordnet ist.

Die Dokumente DE 202 21 564 U1 und DE 10 2004 032 642 A1 offenbaren Landmaschinen mit elektronischen Steuereinrichtungen zur Steuerung und Eingabegeräten zur Eingabe von Steuerbefehlen, wobei auch eine Sprachsteuerung vorgesehen sein kann.

Aus der Praxis bekannte Mensch-Maschine-Schnittstellen für landwirtschaftliche Arbeitsgeräte weisen ein Bedienterminal mit einem Bildschirm und mehreren Eingabetasten und einen Joystick auf. Die Eingabetasten des Bedienterminals sind abhängig von einer zugehörigen Bildschirmanzeige des Bildschirms mit Funktionen belegt. Die Funktion von Eingabetasten ist nicht fest vorgeben, sondern wird durch Änderung des der Taste zugewiesenen Bildschirmbereiches dynamisch angepasst. Typischerweise sind die Eingabetasten abhängig vom zu steuernden oder zu regelnden Arbeitsgerät mit entsprechenden Funktionen steuerungsseitig fest vorbelegt. Derart steuerungsseitig mit Funktionen fest vorbelegte Eingabetasten werden auch als Softkey-Eingabetasten bezeichnet.

Ferner ist es bekannt, dass sogenannte Auxiliary-Eingabetasten, die vorzugsweise an dem Joystick der Mensch-Maschine-Schnittstelle und ggf. auch am Bedienterminal bereitgehalten sind, mit entsprechenden Funktionen frei belegt werden können. Die Belegung solcher Auxiliary-Eingabetasten mit Funktionen durch den Bediener erfolgt über das Bedienterminal.

Hiervon ausgehend liegt der vorliegenden Erfindung die Aufgabe zugrunde, ein Steuerungssystem eines landwirtschaftlichen Arbeitsgeräts mit einfacherer Bedienbarkeit und ein landwirtschaftliches Arbeitsgerät mit einem solchen Steuerungssystem zu schaffen.

Diese Aufgabe wird durch ein Steuerungssystem nach Anspruch 1 gelöst. Das Bedienterminal und/oder eine an das Bedienterminal oder das Steuergerät koppelbare Anzeige- und Eingabeeinrichtung weist eine Spracheingabeeinrichtung auf, wobei über das Bedienterminal und/oder über die Anzeige- und Eingabeeinrichtung von einem Bediener Funktionen des Arbeitsgeräts, die vom Bediener auf die Auxiliary-Eingabetasten der Mensch-Maschine-Schnittstelle legbar sind, der jeweiligen Spracheingabeeinrichtung zuordenbar ist, um diese Funktionen über die Spracheingabeeinrichtung zu bedienen. Die Erfindung schlägt erstmals ein Steuerungssystem für ein landwirtschaftliches Arbeitsgerät vor, die eine Bedienung von Funktionen des Arbeitsgeräts, die vom Bediener auf die Auxiliary-Eingabetasten der Mensch-Maschine-Schnittstelle legbar sind, über eine Spracheingabe zulässt. Hierdurch kann die Bedienung eines Steuerungssystems und damit eines landwirtschaftlichen Arbeitsgeräts vereinfacht werden.

Nach einer vorteilhaften Weiterbildung der Erfindung übermittelt das Steuergerät an das Bedienterminal und/oder an die Anzeige- und Eingabeeinrichtung für die den Auxiliary-Eingabetasten der Mensch-Maschine-Schnittstelle zuordenbaren Funktionen des Arbeitsgeräts Spracheingabezulässigkeitsdaten, die festlegen, ob die jeweilige Funktionen des Arbeitsgeräts von einem Bediener der jeweiligen Spracheingabeeinrichtung für eine Spracheingabebedienung zuordenbar ist, oder die festlegen, ob die jeweilige Funktionen des Arbeitsgeräts von einem Bediener der jeweiligen Spracheingabeeinrichtung für eine Spracheingabebedienung nicht zuordenbar ist. Hierdurch ist es möglich solche Funktionen automatisch für eine Spracheingabebedienung zu sperren bzw. nicht für die Spracheingabebedienung zuzulassen, die sicherheitskritisch sind.

Vorzugsweise sind die Spracheingabezulässigkeitsdaten grafische und/oder numerische Elemente. Dies erlaubt eine einfache und ISO-buskonforme Übermittlung der Spracheingabezulässigkeitsdaten.

Vorzugsweise sind die grafischen und/oder numerischen Elemente, die den Spracheingabezulässigkeitsdaten entsprechen, transparent und damit auf dem Bedienterminal und/oder der Anzeige- und Eingabeeinrichtung nicht sichtbar. Hierdurch wird eine Anzeige auf dem Bedienterminal oder auf der Anzeige- und Eingabeeinrichtung durch die Spracheingabezulässigkeitsdaten nicht beeinträchtigt.

Ferner betrifft die Erfindung ein landwirtschaftliches Arbeitsgerät nach Anspruch 5. Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Blockschaltbild eines ersten erfindungsgemäßen Steuerungssystems mit einer Mensch-Maschine-Schnittstelle für ein zu steuerndes oder zu regelndes, landwirtschaftliches Arbeitsgerät; und
- Fig. 2: ein Blockschaltbild eines zweiten erfindungsgemäßen Steuerungssystems mit einer Mensch-Maschine-Schnittstelle für ein zu steuerndes oder zu regelndes, landwirtschaftliches Arbeitsgerät.

Die hier vorliegende Erfindung betrifft ein Steuerungssystem für ein über einen ISO-Datenbus zu steuerndes oder zu regelndes landwirtschaftliches Arbeitsgerät und ein landwirtschaftliches Arbeitsgerät mit einem solchen Steuerungssystem.

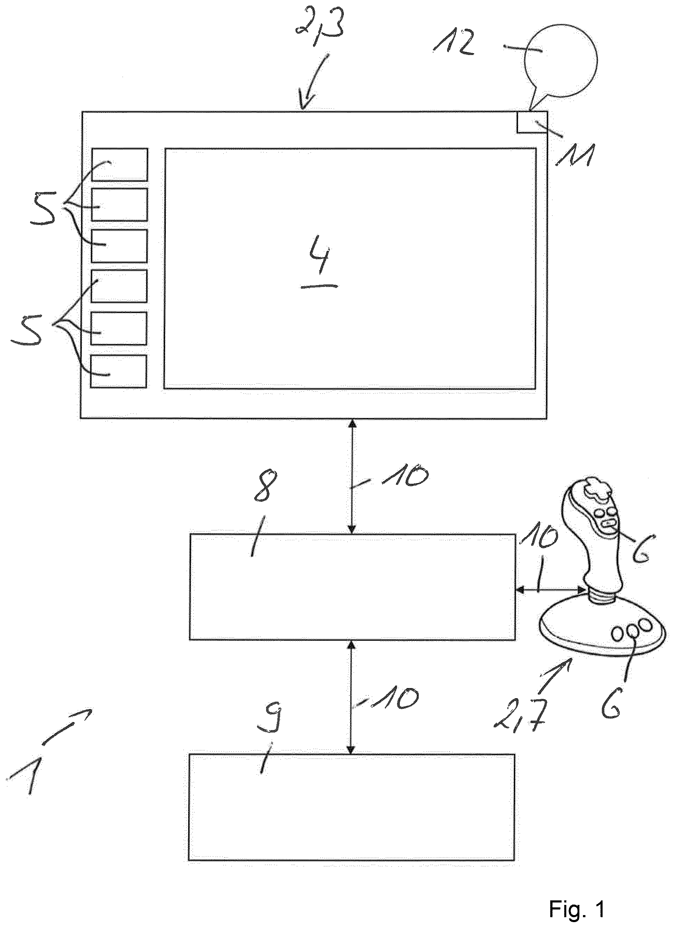

Fig. 1 zeigt stark schematisiert Baugruppen eines Steuerungssystems 1 für ein landwirtschaftliches Arbeitsgerät 9, wobei es sich bei dem landwirtschaftlichen Arbeitsgerät 9 z.B. um ein Zugfahrzeug handeln kann, an welches mehrere Mähwerke gekoppelt sind.

Das Steuerungssystem 1 umfasst ein Steuergerät 8 sowie eine Mensch-Maschine-Schnittstelle 2, die im gezeigten Ausführungsbeispiel ein Bedienterminal 3 sowie einen Joystick 7 umfasst. Das Steuergerät 8 tauscht einerseits mit dem landwirtschaftlichen Arbeitsgerät 9 und andererseits mit den Baugruppen 3 und 7 der Mensch-Maschine-Schnittstelle 2 über einen ISO-Datenbus 10 Daten aus.

Die Mensch-Maschine-Schnittstelle 2, nämlich das Bedienterminal 3 derselben, verfügt über einen Bildschirm 4. Das Bedienterminal 3 verfügt weiterhin über mehrere Softkey-Eingabetasten 5. Im gezeigten Ausführungsbeispiel handelt es sich bei den Softkey-Eingabetasten 5 um Hardwaretasten, die neben dem Bildschirm 4 positioniert sind. Im Unterschied hierzu ist es auch möglich, dass die Softkey-Eingabetasten von Bereichen eines als Touch-Screen ausgebildeten Bildschirms 4 bereitgestellt sind. Die Softkey-Eingabetasten 5 sind solche Eingabetasten, die abhängig von einer zugehörigen Bildschirmanzeige des Bildschirms 4 unterschiedliche Funktionen ausführen bzw. denen abhängig von der zugehörigen Bildschirmanzeige des Bildschirms 4 unterschiedlichen Funktionen zugeordnet sind. Für die Softkey-Eingabetasten 5 sind die entsprechenden Funktionen abhängig vom zu steuernden oder zu regelnden Arbeitsgerät steuerungsseitig fest vorgegeben.

Zusätzlich zu solchen Softkey-Eingabetasten 5, deren Funktionen abhängig vom Arbeitsgerät steuerungsseitig fest vorgegeben sind, umfasst die Mensch-Maschine-Schnittstelle 2 sogenannte Auxiliary-Eingabetasten 6, wobei es sich bei solchen Auxiliary-Eingabetasten 6 um Eingabetasten handelt, deren Funktionen zur Bedienung des Arbeitsgeräts 9 von einem Bediener frei bestimmbar sind. Über das Bedienterminal 3 sind demnach Funktionen des Arbeitsgeräts 9 auf die Auxiliary-Eingabetasten 6 frei legbar, um diese Funktionen über die Auxiliary-Eingabetasten 6 zu bedienen. Im gezeigten Ausführungsbeispiel sind die Auxiliary-Eingabetasten 6 dem Joystick 7 der Mensch-Maschine-Schnittstelle 2 zugeordnet. Zusätzlich kann ggf. auch das Bedienterminal 3 derartige Auxiliary-Eingabetasten aufweisen.

Im Ausführungsbeispiel der Fig. 1 weist das Bedienterminal 3 eine Spracheingabeeinrichtung 11 auf. Über das Bedienterminal 3 können vom Bediener solche Funktionen des Arbeitsgeräts 9, die vom Bediener auf die Auxiliary-Eingabetasten 6 der Mensch-Maschine-Schnittstelle 2 legbar sind, der Spracheingabeeinrichtung 11 zugeordnet werden, um diese Funktionen über die Spracheingabeeinrichtung 11 zu bedienen, nämlich über eine schematisiert dargestellte Spracheingabe 12 eines Bedieners des landwirtschaftlichen Arbeitsgeräts 9.

Es liegt demnach im Sinne der Erfindung, dass solche Funktionen des Arbeitsgeräts 9, die über das Bedienterminal 3 vom Bediener frei auf Auxiliary-Eingabetasten 6 der Mensch-Maschine-Schnittstelle 2 gelegt werden können, für eine Spracheingabesteuerung bzw. Spracheingabebedienung über eine Spracheingabeeinrichtung 11 verfügbar zu machen, wobei diese auf Auxiliary-Eingabetasten 6 legbaren Funktionen über das Bedienterminal 3 der Spracheingabeeinrichtung 11 zugeordnet werden können, um diese Funktionen dann über die Spracheingabeeinrichtung 11 zu bedienen.

Vorzugsweise ist vorgesehen, dass das Steuergerät 8 an das Bedienterminal 3 für die den Auxiliary-Eingabetasten 6 der Mensch-Maschine-Schnittstelle zuordenbaren Funktionen des Arbeitsgeräts Spracheingabezulässigkeitsdaten übermittelt. Diese Spracheingabezulässigkeitsdaten legen fest, ob die jeweilige Funktion des Arbeitsgeräts 9 vom Bediener der Spracheingabeeinrichtung 11 zugeordnet oder nicht zugeordnet werden kann, ob also letztendlich die jeweilige Funktion des Arbeitsgeräts 9 über eine Spracheingabe 12 bedient oder nicht bedient werden kann. Hierdurch ist es möglich, über die vom Steuergerät 8 übermittelten Spracheingabezulässigkeitsdaten sicherheitskritische Funktionen des Arbeitsgeräts von der Spracheingabe auszuschließen bzw. für die Spracheingabe zu sperren. Vorzugsweise übermittelt das Steuergerät 8 die Spracheingabezulässigkeitsdaten an das Bedienterminal 3 über den ISO-Datenbus 10 als grafische und/oder numerische Elemente. Das grafische und/oder numerische Element, welches zum Beispiel eine digitale Zahl mit einer definierten Bitlänge sein kann, enthält Daten darüber, ob eine Funktion sicherheitskritisch ist, also Daten darüber, ob die Funktion einer Spracheingabe zugänglich gemacht werden darf oder nicht. Solche grafischen und/oder numerischen Elemente können vom ISO-Datenbus 10 einfach an das Bedienterminal 3 übertragen werden, wobei die grafischen und/oder numerischen Elemente vorzugsweise transparent und damit auf dem Bedienterminal 3 nicht sichtbar sind, um so eine Anzeige auf dem Bildschirm 4 des Bedienterminals 3 durch die Spracheingabezulässigkeitsdaten nicht zu beeinträchtigen.

Im gezeigten Ausführungsbeispiel der Fig. 1 wird davon ausgegangen, dass das Bedienterminal 3 der Mensch-Maschine-Schnittstelle 2 die Spracheingabeeinrichtung 11 aufweist.

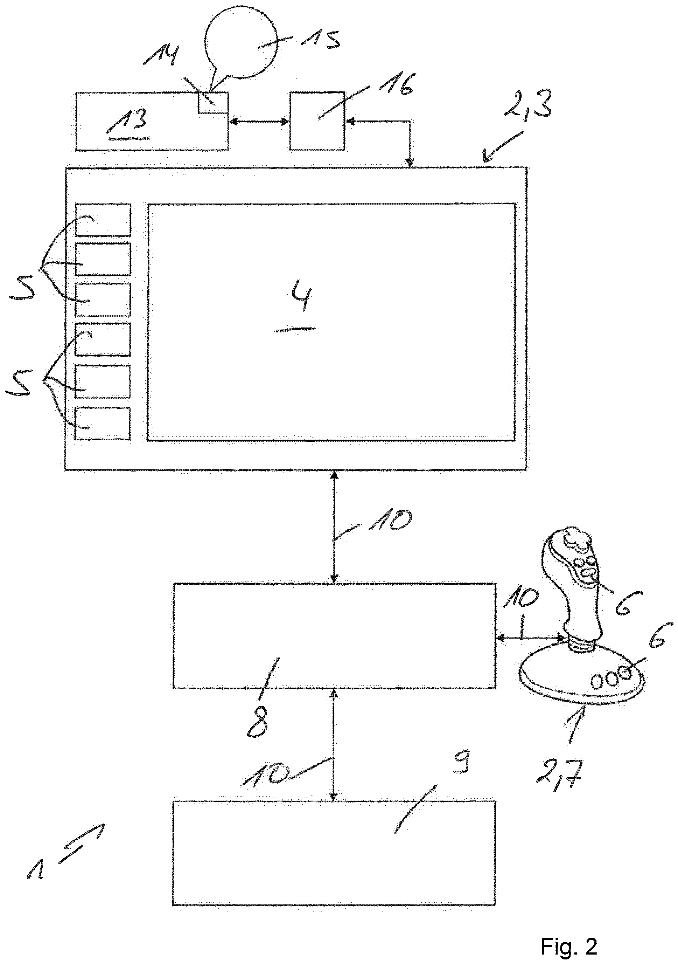

Sollte das Bedienterminal 3 keine derartige Spracheingabeeinrichtung 11 aufweisen, so ist es möglich, wie im Ausführungsbeispiel der Fig. 2 gezeigt, an das Bedienterminal 3 eine separate Anzeige- und Eingabeeinrichtung 13 mit einer Spracheingabeeinrichtung 14 zu koppeln, wobei es sich bei dieser Anzeige- und Eingabeeinrichtung 13 zum Beispiel um ein Mobiltelefon oder einen Tablet-PC handeln kann. In diesem Fall ist es dann möglich, die Spracheingabeeinrichtung 14 der separaten Anzeige- und Eingabeeinrichtung 13 zur Spracheingabebedienung bzw. Spracheingabesteuerung der entsprechenden Funktionen des Arbeitsgeräts 9 zu nutzen, wobei insbesondere vorgesehen ist, dass eine zwischen das Bedienterminal 3 und die Anzeige- und Eingabeeinrichtung 13 geschaltete Vorrichtung 16 den ordnungsgemäßen Betrieb der Anzeige- und Eingabeeinrichtung 13 überwacht. Über diese Vorrichtung 16 wird sichergestellt, dass dann, wenn dieselbe eine nicht-ordnungsgemäße Funktion der Anzeige- und Eingabeeinrichtung 13 erkennt, eine Bedienung über die Anzeige- und Eingabeeinrichtung 13, insbesondere eine Bedienung über eine Spracheingabe 15, nicht weiter zugelassen wird, sondern vielmehr eine Bedienung über die Anzeige- und Eingabeeinrichtung 13 unterbunden wird.

Im Ausführungsbeispiel der Fig. 2 ist die Anzeige- und Eingabeeinrichtung 13 über die Vorrichtung 16 an das Bedienterminal 3 angeschlossen. Im Unterschied hierzu ist es auch möglich, dass die Anzeige- und Eingabeeinrichtung 13 über die Vorrichtung 16 unmittelbar an das Steuergerät 8 gekoppelt wird. In diesem Fall tauscht das Steuergerät 8 in Analogie zum Datenaustausch mit dem Bedienterminal 3 über den ISO-Datenbus 10 Daten mit der Vorrichtung 16 aus, an die die Anzeige- und Eingabeeinrichtung 13 gekoppelt ist. In diesem Fall kann dann der Bediener über die Anzeige- und Eingabeeinrichtung 13 Funktionen des Arbeitsgeräts 9 frei auf Auxiliary-Eingabetasten 6 legen und abhängig von den vom Steuergerät 8 an die Vorrichtung 16 übermittelten Spracheingabezulässigkeitsdaten diese Funktionen der Spracheingabeeinrichtung 14 zuordnen, um eine Spracheingabebedienung für diese Funktionen zu ermöglichen. Dabei können, wie bereits oben ausgeführt, vom Bediener nur solche Funktionen der Auxiliary-Eingabetasten 6 für eine Spracheingabe nutzbar gemacht werden, deren Spracheingabezulässigkeitsdaten dies grundsätzlich zulassen.

Mit der hier vorliegenden Erfindung wird demnach eine Spracheingabe und damit Sprachsteuerung für Funktionen eines Steuerungssystems 1 eines landwirtschaftlichen Arbeitsgeräts 9 möglich. Solche Funktionen des landwirtschaftlichen Arbeitsgeräts 9, die von einem Bediener frei auf Auxiliary-Eingabetasten 6 des Steuerungssystems 1 gelegt werden können, können vom Bediener auch für eine Spracheingabe genutzt werden, nämlich abhängig davon, ob vom Steuergerät 8 übermittelte Spracheingabezulässigkeitsdaten dies grundsätzlich zulassen oder nicht. Hiermit kann steuerungsseitig verhindert werden, dass sicherheitsrelevante Funktionen des landwirtschaftlichen Arbeitsgeräts 9 über eine Spracheingabe bedient werden. Die Spracheingabezulässigkeitsdaten werden dabei vom Steuergerät 8 des Steuerungssystems 1 vorzugsweise als grafisches und/oder numerisches Element über den ISO-Datenbus 10 übertragen, wobei die grafischen und/oder numerischen Elemente Daten darüber enthalten, ob für die auf die Auxiliary-Eingabetasten 6 legbaren Funktionen eine Spracheingabe zulässig ist oder nicht. Diese grafischen und/oder numerischen Elemente werden vorzugsweise transparent angezeigt, sodass dieselben für einen Bediener nicht sichtbar sind.

### Bezugszeichenliste

- 1: Steuerungssystem
- 2: Mensch-Maschine-Schnittstelle
- 3: Bedienterminal
- 4: Bildschirm
- 5: Eingabetaste
- 6: Eingabetaste
- 7: Joystick
- 8: Steuergerät
- 9: Landwirtschaftliches Arbeitsgerät
- 10: ISO-Datenbus
- 11: Spracheingabeeinrichtung
- 12: Spracheingabe
- 13: Anzeige- und Eingabeeinrichtung
- 14: Spracheingabeeinrichtung
- 15: Spracheingabe

## Patentansprüche

1. Steuerungssystem (1) eines über einen ISO-Datenbus (10) zu steuernden und/oder zu regelnden, landwirtschaftlichen Arbeitsgeräts (9), mit einem Steuergerät (8) und mit einer Mensch-Maschine-Schnittstelle (2), wobei das Steuergerät (8) einerseits mit dem landwirtschaftlichen Arbeitsgerät (9) und andererseits mit der Mensch-Maschine-Schnittstelle (2) Daten über den ISO-Datenbus (10) austauscht, wobei die Mensch-Maschine-Schnittstelle (2) ein Bedienterminal (3) und einen Joystick (7) aufweist, wobei über das Bedienterminal (3) von einem Bediener Funktionen des Arbeitsgeräts (9) frei auf Auxiliary-Eingabetasten (6) des Bedienterminals und/oder des Joysticks (7) legbar sind, um diese Funktionen über die Auxiliary-Eingabetasten (6) zu bedienen, **dadurch gekennzeichnet, dass** das Bedienterminal (3) und/oder eine an das Bedienterminal (3) oder das Steuergerät (8) koppelbare Anzeige- und Eingabeeinrichtung (13) eine Spracheingabeeinrichtung (11, 14) aufweist, und dass über das Bedienterminal (3) und/oder die Anzeige- und Eingabeeinrichtung (13) von einem Bediener Funktionen des Arbeitsgeräts (9), die vom Bediener auf die Auxiliary-Eingabetasten (6) der Mensch-Maschine-Schnittstelle (2) legbar sind, der jeweiligen Spracheingabeeinrichtung (11, 14) zuordenbar sind, um diese Funktionen über die Spracheingabeeinrichtung (11, 14) zu bedienen.

2. Steuerungssystem nach Anspruch 1, **dadurch gekennzeichnet, dass** das Steuergerät (8) an das Bedienterminal (3) und/oder an die Anzeige- und Eingabeeinrichtung (13) für die den Auxiliary-Eingabetasten (6) der Mensch-Maschine-Schnittstelle (2) zuordenbaren Funktionen des Arbeitsgeräts (9) Spracheingabezulässigkeitsdaten übermittelt, die festlegen, ob die jeweilige Funktionen des Arbeitsgeräts (9) von einem Bediener der jeweiligen Spracheingabeeinrichtung (11, 14) für eine Spracheingabebedienung zuordenbar ist, oder die festlegen, ob die jeweilige Funktionen des Arbeitsgeräts (9) von einem Bediener der jeweiligen Spracheingabeeinrichtung (11, 14) für eine Spracheingabebedienung nicht zuordenbar ist.

3. Steuerungssystem nach Anspruch 2, **dadurch gekennzeichnet, dass** die Spracheingabezulässigkeitsdaten grafische und/oder numerische Elemente sind.

4. Steuerungssystem nach Anspruch 3, **dadurch gekennzeichnet, dass** die grafischen und/oder numerischen Elemente, die den Spracheingabezulässigkeitsdaten entsprechen, transparent und damit auf dem Bedienterminal (3) und/oder der Anzeige- und Eingabeeinrichtung (13) nicht sichtbar sind.

5. Landwirtschaftliches Arbeitsgerät (9) mit einem Steuerungssystem (1) nach einem der Ansprüche 1 bis 4.

## Claims

1. A control system (1) of an agricultural implement (9) which is to be open-loop and/or closed-loop controlled by way of an ISO data bus (10) comprising a control device (8) and a man-machine interface (2), wherein the control device (8) exchanges data by way of the ISO data bus (10) on the one hand with the agricultural implement (9) and on the other hand with the man-machine interface (2), wherein the man-machine interface (2) has an operating terminal (3) and a joystick (7), wherein functions of the implement (9) can be freely placed by way of the operating terminal (3) by an operator on auxiliary input keys (6) of the operating terminal and/or the joystick (7) to operate those functions by way of the auxiliary input keys (6), **characterised in that** the operating terminal (3) and/or a display and input device (13) which can be coupled to the operating terminal (3) or the control device (8) has a voice input device (11, 14) and functions of the implement (9) which can be placed by an operator on the auxiliary input keys (6) of the man-machine interface (2) can be associated by an operator by way of the operating terminal (3) and/or the display and input device (13) with the respective voice input device (11, 14) in order to operate those functions by way of the voice input device (11, 14).

2. A control system according to claim 1 **characterised in that** the control device (8) communicates voice input permission data to the operating terminal (3) and/or to the display and input device (13) for the functions of the implement (9), that can be associated with the auxiliary input keys (6) of the man-machine interface (2), which data establish whether the respective functions of the implement (9) can be associated by an operator with the respective voice input device (11, 14) for voice input operation or establish whether the respective functions of the implement (9) cannot be associated by an operator with the respective voice input device (11, 14) for voice input operation.

3. A control system according to claim 2 **characterised in that** the voice input permission data are graphic and/or numerical elements.

4. A control system according to claim 3 **characterised in that** the graphic and/or numerical elements corresponding to the voice input permission data are transparent and are thus not visible on the operating terminal (3) and/or the display and input device (13).

5. An agricultural implement (9) having a control system (1) according to one of claims 1 to 4.

## Revendications

1. Système de commande (1) d'un outil de travail agricole (9) à commander et/ou à réguler par l'intermédiaire d'un bus de données ISO (10), comprenant un appareil de commande (8) et comprenant une interface homme-machine (2), l'appareil de commande (8) échangeant des données par l'intermédiaire du bus de données ISO (10), d'une part, avec l'outil de travail agricole (9) et, d'autre part, avec l'interface homme-machine (2), l'interface homme-machine (2) comportant un terminal d'utilisation (3) et une manette (7), des fonctions de l'outil de travail (9) pouvant être librement appliquées à des touches d'entrée auxiliaires (6) du terminal d'utilisation et/ou de la manette (7) par un utilisateur par l'intermédiaire du terminal d'utilisation (3) afin d'utiliser ces fonctions par l'intermédiaire des touches d'entrée auxiliaires (6), **caractérisé en ce que** le terminal d'utilisation (3) et/ou un équipement d'affichage et de saisie (13) couplables au terminal d'utilisation (3) ou à l'appareil de commande (8) comportent un équipement de saisie vocale (11, 14), et **en ce que** des fonctions de l'outil de travail (9), qui sont applicables par l'utilisateur aux touches d'entrée auxiliaires (6) de l'interface homme-machine (2), sont affectables par l'utilisateur à l'équipement de saisie vocale respectif (11, 14) par l'intermédiaire du terminal d'utilisation (3) et/ou de l'équipement d'affichage et de saisie (13) afin d'utiliser ces fonctions par l'intermédiaire de l'équipement de saisie vocale (11, 14).

2. Système de commande selon la revendication 1, **caractérisé en ce que** l'appareil de commande (8) transmet au terminal d'utilisation (3) et/ou à l'équipement d'affichage et de saisie (13) des données d'admissibilité de saisie vocale aux fonctions de l'outil de travail (9) affectables aux touches d'entrée auxiliaires (6) de l'interface homme-machine (2), lesquelles données déterminent si les fonctions respectives de l'outil de travail (9) sont affectables par un utilisateur de l'équipement de saisie vocale respectif (11, 14) pour une utilisation par saisie vocale ou qui définissent si les fonctions respectives de l'outil de travail (9) ne sont pas affectables par un utilisateur de l'équipement de saisie vocale respectif (11, 14) pour une utilisation par saisie vocale.

3. Système de commande selon la revendication 2, **caractérisé en ce que** les données d'admissibilité de saisie vocale sont des éléments graphiques et/ou numériques.

4. Système de commande selon la revendication 3, **caractérisé en ce que** les éléments graphiques et/ou numériques qui correspondent aux données d'admissibilité de saisie vocale sont transparents et donc non visibles sur le terminal d'utilisation (3) et/ou sur l'équipement d'affichage et de saisie (13).

5. Outil de travail agricole (9) comprenant un système de direction (1) selon une des revendications 1 à 4.
